# EUROPÄISCHE PATENTANMELDUNG

(11) **EP 4 056 533 A1**
(43) Veröffentlichungstag der Anmeldung: **14.09.2022**
(21) Anmeldenummer: 22154306.9
(22) Anmeldetag: 31.01.2022
(51) Int. Cl.: C01B 25/28, C01B 25/45, C01C 1/245

(54) **VERFAHREN ZUR SELEKTIVEN TRENNUNG UND AUFBEREITUNG VON STOFFSTRÖMEN AUS EINEM HYDROTHERMALEN KARBONISIERUNGSPROZESS**

(30) Priorität: 10.03.2021 DE 102021105793
(71) Anmelder: IPI.AG, 3186 Düdingen (CH)
(72) Erfinder: Kusche, Stepan, 17121 Loitz (DE); Ender, Tommy, 17087 Altentreptow (DE)
(74) Vertreter: Christ, Niko

(57) **Zusammenfassung**

Die Erfindung betrifft ein Verfahren zur selektiven Trennung und Aufbereitung von Stoffströmen aus einem hydrothermalen Karbonisierungsprozess, wobei der aus dem hydrothermalen Karbonisierungsprozess entstammende Stoffstrom mittels einer Fest-Flüssig-Trennung in einen feststoffhaltigen Stoffstrom und in einen prozesswasserhaltigen Stoffstrom separiert und in einem Endschritt aus dem wenigstens einem Stoffstrom ein Produkt gebildet wird.

Um energie- und ressourcenschonend eine Selektierung und Auftrennung von wenigstens einem Stoffstrom aus einem hydrothermalen Karbonisierungsprozess durchführen zu können, schlägt das erfindungsgemäße Verfahren vor, dass zur Justierung des pH-Werts des wenigstens einen Stoffstroms eine Zugabe von Säuren und Basen weggelassen wird.

Damit können insbesondere unerwünschte Effekte, beispielsweise eine vorzeitige Ausfällung etwaiger gelöster Stoffe, unterbunden werden, bis schließlich das gewünschte Zwischenprodukt bzw. Endprodukt aus dem wenigstens einen, aus dem hydrothermalen Karbonisierungsprozess entstammenden Stoffstrom extrahiert werden kann.

## Beschreibung

Die Erfindung betrifft ein Verfahren zur selektiven Trennung und Aufbereitung von Stoffströmen aus einem hydrothermalen Karbonisierungsprozess, wobei der aus dem hydrothermalen Karbonisierungsprozess entstammende Stoffstrom mittels einer Fest-Flüssig-Trennung in einen feststoffhaltigen Stoffstrom und in einen prozesswasserhaltigen Stoffstrom separiert und in einem Endschritt aus dem wenigstens einem Stoffstrom ein Produkt gebildet wird. Die Erfindung betrifft ebenfalls die Verwendung der durch das Verfahren erhältlichen Stoffströme, im Besonderen zur Herstellung von Ammoniumsulfat, Ammoniumphosphat, Magnesiumammoniumphosphat (MAP) sowie von Trägermaterialien oder Sorbens zur Abwasserreinigung.

Biomassen, insbesondere Klärschlämme, weisen selten eine homogene Zusammensetzung auf und resultieren sehr häufig aus unterschiedlichsten Stoffströmen sowie Zuflüssen, wobei ein solches Gemisch nur dann effizient aufbereitet und verwertet werden kann, wenn ein entsprechender Aufschluss wieder die spätere Selektierung in Einzelstoffströme ermöglicht.

Ein solches mögliches Aufschlussverfahren ist die Behandlung der Biomasse mittels eines hydrothermalen Karbonisierungsverfahrens (HTC), bei dem die Biomasse unter hohem Druck und Temperatur, meist in einen Temperaturbereich von 185 bis 220 °C und Drücken bis zu 25 bar, behandelt wird. Üblicherweise bestehen solche Biomassen zu einem hohen Prozentsatz aus Kohlenhydraten oder Polysacchariden, die unter Abspaltung von Kohlendioxid und Wasser Kohle, ähnlich der Braunkohle, bilden.

Solche hydrothermalen Karbonisierungsverfahren sind bereits im Stand der Technik vielfältig bekannt, etwa aus der DE 10 2011 001 954 A1. Diese Schrift sieht vor, während des Ablaufens der hydrothermalen Karbonisierung eine Durchmischung der Biomasse sowie des zugefügten Dampfes vorzunehmen, um aufgrund der Durchmischung eine große Reaktionsfläche und damit eine große Angriffsfläche für Druck und Hitze bereitzustellen. Es hat sich gezeigt, dass hieraus eine deutlich schneller beginnende und gleichmäßiger ablaufende Karbonisierungsreaktion erfolgt.

Basis der hydrothermalen Karbonisierungsreaktion ist die zugeführte Biomasse, welche üblicherweise Lignin enthält, in welchem die zur Karbonisierung vorgesehene Zellulose, also ein Polysaccharid, gebunden ist.

Zu Beginn des hydrothermalen Karbonisierungsprozesses findet zunächst eine Hydrolyse statt, welche eine Umwandlung der Zellulose in Glukose bewirkt. Diese ist hierbei im Prozesswasser gelöst. Innerhalb des Prozesses erfordert die Hydrolyse lediglich eine kurze Zeit, etwa ein bis zwei Minuten. Anschließend findet dann die eigentliche Karbonisierungsreaktion statt, wobei diese meist unter einem Druck von etwa 25 bar und bei einer Temperatur von 210 bis 230 °C abläuft.

Nach der Karbonisierung erfolgt als praktisch letzter großer Schritt die sogenannte Kondensation, bei welcher ein Zusammenschließen der wasserlöslichen Kohlenstoff-Bestandteile zu größeren Molekülen erfolgt. Daraus bildet sich anschließend die HTC-Kohle. Diese hat ähnliche Eigenschaften wie Braunkohle und kann daher als Energieträger, aber auch zur Bodenverbesserung oder als Sorbens in der Abwasserreinigung eingesetzt werden.

Vergleichbares ist aus der DE 10 2014 112 108 B3 vorbekannt. Hier wird zur Rückgewinnung von Phosphor aus Klärschlamm ebenfalls ein hydrothermales Karbonisierungsverfahren angewendet, mit einem sich hieran anschließenden sauren Aufschluss, der die in Form von Metallphosphaten vorhandenen Phosphatverbindungen in Phosphorsäure überführt.

Ferner ist aus der Veröffentlichung von Wirth et al. (Wirth, Benjamin, and Jan Mumme. "Anaerobic digestion of waste water from hydrothermal carbonization of corn silage." Appl. Bioenergy 1.1 (2013): 10-2478.) ein Verfahren zur Gewinnung eines stickstoffhaltigen Stoffstroms aus Abwässern mittels eines anaerob geführten Prozesses vorbekannt.

Ausgehend von diesem Stand der Technik ist die Aufgabe, die sich die Erfindung stellt, die energie- und ressourcenschonende Selektierung und Aufbereitung von Stoffströmen aus einem hydrothermalen Karbonisierungsprozess.

Diese Aufgabe wird in einem ersten Aspekt mit einem Verfahren gemäß dem unabhängigen Anspruch 1 gelöst. Vorteilhafte Ausgestaltungen des erfindungsgemäßen Verfahrens können den abhängigen Ansprüchen entnommen werden.

Bei der Erfindung handelt es sich um ein Verfahren zur selektiven Trennung und Aufbereitung von wenigstens einem Stoffstrom aus einem hydrothermalen Karbonisierungsprozess, wobei der aus dem hydrothermalen Karbonisierungsprozess entstammende Stoffstrom mittels einer Fest-Flüssig-Trennung in einen feststoffhaltigen Stoffstrom und in einen prozesswasserhaltigen Stoffstrom separiert und in einem Endschritt aus dem wenigstens einem Stoffstrom ein Produkt gebildet wird.

Durch die Fest-Flüssig-Trennung können etwaige aus dem hydrothermalen Karbonisierungsprozess entstammende Feststoffe, insbesondere die beim hydrothermalen Karbonisierungsprozess entstehende HTC-Kohle, aus dem wenigstens einen aus dem hydrothermalen Karbonisierungsprozess entstammenden Stoffstrom entfernt werden, sodass der hierdurch erhaltene feststoffhaltige Stoffstrom sowie der prozesswasserhaltige Stoffstrom jeweils für sich im weiteren selektiert und aufbereitet werden können.

Nach der Selektierung und Aufbereitung, insbesondere durch Reinigung oder Filtration, des wenigstens einen Stoffstroms kann in einem Endschritt aus dem wenigstens einen Stoffstrom ein gewünschtes Produkt oder Zwischenprodukt gebildet werden, wobei dies beispielsweise durch Zugabe einer Säure oder Base unter Bildung eines Salzes erfolgen kann.

Das erfindungsgemäße Verfahren zeichnet sich dadurch aus, dass der pH-Wert des wenigstens einen, aus dem hydrothermalen Karbonisierungsprozess entstammenden Stoffstroms bis frühestens beim Endschritt nicht justiert wird, insbesondere durch Zugabe einer Säure und/oder einer Base, also letztlich die Zugabe einer Säure oder Base bis zum Erreichen des Endschrittes weggelassen wird.

Dadurch, dass der pH-Wert des wenigstens einen, aus dem hydrothermalen Karbonisierungsprozess entstammenden Stoffstroms während der Selektierung und Aufbereitung nicht justiert wird, können unerwünschte Effekte, beispielsweise eine vorzeitige Ausfällung etwaiger gelöster Stoffe, unterbunden werden, bis schließlich das gewünschte Zwischenprodukt bzw. Endprodukt aus dem wenigstens einen, aus dem hydrothermalen Karbonisierungsprozess entstammenden Stoffstrom ausgefällt bzw. extrahiert werden kann.

Hierdurch entfällt beispielsweise die zyklische Anpassung des pH-Wertes nach jedem Trennschritt, womit energie- und ressourcenschonend und somit letztlich kosteneffizient Zwischen- und Endprodukte aus dem wenigstens einen, aus dem hydrothermalen Karbonisierungsprozess entstammenden Stoffstrom gewonnen werden können, da insbesondere der Chemikalieneinsatz, beispielsweise in Form von Säuren und Basen, zur Justierung des pH-Wertes des wenigstens einen aus dem hydrothermalen Karbonisierungsprozess entstammenden Stoffstroms reduziert werden kann.

Somit stellt die Erfindung ein Verfahren bereit, mit dem letztlich eine kosteneffiziente Verwertung von wenigstens einem aus einem hydrothermalen Karbonisierungsprozess entstammenden Stoffstrom ermöglicht werden kann.

In einer vorteilhaften Ausgestaltung sieht das Verfahren vor, dass die Bildung des Produktes im Endschritt ohne die Justierung des pH-Wertes des wenigstens einen Stoffstroms erfolgt. Das bedeutet, dass der jeweils vorhandene pH-Wert des wenigstens einen Stoffstroms beispielsweise zur Fällung eines Salzes nicht angepasst wird, um auf zusätzliche Chemikalien, insbesondere Säuren und Basen, verzichten zu können.

Da je nach zu bildenden Produktes es allerdings vorteilhaft sein kann, dem pH-Wert, insbesondere bei Fällung, anzupassen, um beispielsweise die Reinheit und die maximale Ausbeute des zu bildenden Produktes zu optimieren, sieht das Verfahren in einer weiteren vorteilhaften Ausgestaltung vor, dass der pH-Wert des wenigstens einen Stoffstroms durch Zugabe einer Säure und/oder Base bei der Bildung des Produktes im Endschritt angepasst wird.

Um den feststoffhaltigen Stoffstrom auch weiterhin durch geeignete Rohrsysteme pumpen und damit zu weiteren Selektierungs- und Aufbereitungsschritten an die entsprechende Anlagen leiten zu können, sieht das Verfahren in einer bevorzugten Ausgestaltung vor, dass der feststoffhaltige Stoffstrom einen Anteil von Feststoffen, insbesondere von HTC-Kohle, in Höhe von bis zu 50 Gew. % aufweist. Durch die Anreicherung der Feststoffe im feststoffhaltigen Stoffstrom auf bis zu 50 Gew. % kann letztlich gewährleistet werden, dass diese Suspension, auch Slurry genannt, auch weiterhin wie eine Flüssigkeit durch beispielweise Rohrsysteme gepumpt werden kann, ohne dass es dabei zu Ablagerungen oder Verstopfungen aufgrund eines zu hohen Feststoffanteils des feststoffhaltigen Stoffstroms bei Transport von diesem kommt oder hohe Drücke zur Förderung benötigt werden, wodurch ebenfalls Energie bei der weiteren Verarbeitung eingespart werden kann.

In einer weiteren vorteilhaften Ausgestaltung sieht das Verfahren vor, dass die Fest-Flüssig-Trennung des wenigstens einem aus dem hydrothermalen Karbonisierungsprozess entstammenden Stoffstroms in einen feststoffhaltigen und einen prozesswasserhaltigen Stoffstrom mittels Sedimentation durchgeführt wird.

Bei der Sedimentation handelt es sich um ein Ablagern von Teilchen aus Flüssigkeiten oder Gasen unter dem Einfluss der Gewichts- oder der Zentrifugalkraft. Beispielsweise kommen sogenannte Sedimentationsbecken bzw. Absatzbecken bei Kläranlagen zum Einsatz, bei denen die Stoffe, die schwerer als die Flüssigkeit sind, in der sie sich befinden, auf den Behälterboden sinken. Diese dekantierbaren Stoffe können anschließend mithilfe von Sandfängen oder Schlammsammlern aus der Flüssigkeit entfernt und gegebenenfalls weiterverarbeitet werden.

In einer weiteren vorteilhaften Ausgestaltung sieht das Verfahren vor, dass ein Teil des prozesswasserhaltigen Stoffstroms in den hydrothermalen Karbonisierungsprozess zurückgeführt wird. Damit können etwaige gelöste Inhaltsstoffe innerhalb des prozesswasserhaltigen Stoffstroms sowie die innerhalb des prozesswasserhaltigen Stoffstroms gespeicherte Wärmeenergie zurück in den hydrothermalen Karbonisierungsprozess geführt werden. Hierdurch kann insbesondere sowohl die Kristallisationsrate und die damit verbundene effektive HTC-Kohlebildung während des hydrothermalen Karbonisierungsprozesses erhöht werden als auch ein Teil der für den hydrothermalen Karbonisierungsprozess benötigten Energie in Form von Wärme aus dem zurückgeführten Teil des prozesswasserhaltigen Stoffstroms zurückgewonnen werden.

Um vorhandene Phosphorverbindungen aus dem feststoffhaltigen Stoffstrom aufschließen bzw. extrahieren zu können, wobei die Phosphorverbindungen die insbesondere in der durch den hydrothermalen Karbonisierungsprozess hergestellten HTC-Kohle aufgrund deren Adsorptionsaffinität zu Aktivkohle eingeschlossen sind, sieht das Verfahren in einer vorteilhaften Ausgestaltung vor, den feststoffhaltigen Stoffstrom mittels Auslaugung derart zu behandeln, dass die im feststoffhaltigen Stoffstrom enthaltenen Phosphorverbindungen in einen phosphorhaltigen Stoffstrom überführt werden können. Unter Auslaugung ist dabei die Herauslösung von Substanzen mittels eines jeweils geeigneten Lösungsmittels aus einem Feststoff zu verstehen.

Damit auch schwerlösliche Phosphorverbindungen aus dem feststoffhaltigen Stoffstrom extrahiert bzw. aufgeschlossen werden können, sieht das Verfahren in einer weiteren vorteilhaften Ausgestaltung vor, dass die Auslaugung des feststoffhaltigen Stoffstroms mit Lösungen bzw. Lösungsmitteln mit einem sauren pH-Wert, bevorzugt mit einem pH-Wert von 1 bis 2, durchgeführt wird.

Ferner sieht das Verfahren in einer vorteilhaften Ausgestaltung vor, dass der phosphorhaltige Stoffstrom mittels einer Filtration und/oder einem Flüssig-Flüssig-Trennverfahren gereinigt wird. Bei der Filtration kann es sich hierbei beispielsweise um eine Mikro-, Ultra- oder Nanofiltration handeln, je nach zu erreichendem Reinheitsgrad. Zu Anwendung können dabei sowohl permeable als auch semipermeable Membranen kommen.

Unter Flüssig-Flüssig-Trennverfahren ist beispielsweise die Flüssig-Flüssig-Extraktion zu verstehen, bei der die unterschiedlichen Löslichkeiten von Stoffen in zwei nicht miteinander mischbaren Lösungsmitteln ausgenutzt wird. Als Lösungsmittel kommt hierbei meist ein hydrophiles (meist Wasser) und ein hydrophobes, häufig organisches, Lösungsmittel zum Einsatz.

Da insbesondere die aus dem hydrothermalen Karbonisierungsprozess gebildete HTC-Kohle braunkohleähnliche Eigenschaften aufweist, also sich insbesondere zur Energiegewinnung durch Verbrennung eignet, sieht das Verfahren in einer vorteilhaften Ausgestaltung vor, dass die im feststoffhaltigen Stoffstrom vorhandenen Feststoffe, insbesondere HTC-Kohle, mittels einer Fest-Flüssig-Trennung, insbesondere einer Filtration, aus dem feststoffhaltigen Stoffstrom abgetrennt werden können.

Auch hier kann es sich bei der Filtration beispielsweise um eine Mikro-, Ultra- oder Nanofiltration handeln, je nach zu erreichendem Reinheitsgrad. Zu Anwendung können dabei sowohl permeable als auch semipermeable Membranen kommen. Darüber hinaus kann es vorteilhaft sein, wenn die Fest-Flüssig-Trennung unter Druck durchgeführt wird, sodass der aus dem feststoffhaltigen Stoffstrom erhaltene Feststoff einen möglichst geringen Anteil von etwaigen flüssigen Rückständen beinhaltet.

Der von Feststoff abgetrennte, nährstoffreiche und noch Restwärme aus dem hydrothermalen Karbonisierungsprozess enthaltene prozesswasserhaltige Stoffstrom kann in einer vorteilhaften Ausgestaltung des Verfahrens in ein anaerobes Reaktionsgefäß, insbesondere in einen anaeroben Reaktor, zum Aufschluss von Stickstoffverbindungen aus dem prozesswasserhaltigen Stoffstrom und zur Bildung eines stickstoffhaltigen Stoffstroms, eingeführt werden.

Dabei kann als anaerobes Reaktionsgefäß bzw. Reaktor beispielsweise bei Kläranlagen ein sogenannter Faulturm verwendet werden, bei dem unter Sauerstoffausschluss eine Ammonifikation mithilfe von Mikroorganismen durchgeführt wird. Diese Mikroorganismen, auch Destruenten genannt, sind in der Lage, Ammoniak aus organischen Stickstoffverbindungen abzuspalten, wobei letztlich vor allem Ammoniak, Kohlenstoffdioxid sowie Biogas entsteht. Das so gebildete Ammoniak liegt dabei meist gelöst in Form von Ammonium-Ionen vor, womit letztlich eine Alkalisierung des stickstoffhaltigen Stoffstroms bewirkt wird.

Um mögliche Rückstände des Ammonifikationsprozess aus dem stickstoffhaltigen Stoffstrom entfernen zu können, sieht das Verfahren in einer vorteilhaften Ausgestaltung vor, dass der stickstoffhaltige Stoffstrom mittels Ultrafiltration gereinigt wird. Generell handelt es sich bei der Ultrafiltration um ein Filtrationsverfahren bei den makromolekularen Substanzen und kleine Partikel aus einem Medium abgetrennt und aufkonzentriert werden können. Die Ausschlussgrenze liegt bei einer Ultrafiltration üblicherweise zwischen 2 und 100 nm, d. h. das größere Substanzen bzw. Partikel die Membran nicht durchdringen können und somit zurückgehalten werden.

Damit eine hohe Reinheit des stickstoffhaltigen Stoffstroms gewährleistet werden kann, sieht das Verfahren in einer weiteren vorteilhaften Ausgestaltung vor, dass der stickstoffhaltige Stoffstrom mit einer Nanofiltration gereinigt wird. Generell handelt es sich bei der Nanofiltration um ein druckgetriebenes Membranfiltrationsverfahren, das gelöste Moleküle, Schwermetallionen und andere kleine Partikel zurückhält. Die Ausschlussgrenze liegt bei einer Nanofiltration üblicherweise bei einer Porengröße von maximal 2 nm. Somit können auch inerte bzw. refraktäre, also schwer abbaubare bzw. abbauresistente Verbindungen zurückgehalten werden. Dabei handelt es sich aufgrund des hydrothermalen Karbonisierungsprozesses typischerweise um niedrigmolekulare aromatische Amine und Säuren, z.B. Huminverbindungen, insbesondere Huminstoffhydrolysate, die teilweise nicht wasserlöslich oder nur in einem basischen Milieu löslich sind. In vorteilhafter Weise werden die so zurückgehaltenen Verbindungen und Partikel wieder in den hydrothermalen Karbonisierungsprozess und/oder in das anaerobe Gefäß zur weiteren Zerlegung zurückgeführt.

Gemäß einem weiteren Aspekt betrifft die vorliegende Erfindung einen stickstoffhaltigen Stoffstrom, der durch das oben beschriebene Verfahren erhältlich ist.

Die Erfindung sieht vor, dass der stickstoffhaltige Stoffstrom zur Herstellung von Ammoniumsulfat mit Schwefelsäure in Kontakt gebracht wird. Dabei kann sich das Ammoniumsulfat beispielsweise durch das innerhalb des stickstoffhaltigen Stoffstroms vorhandene Ammoniak durch Reaktion mit der Schwefelsäure bilden.

Dabei liegt das Ammoniak im stickstoffhaltigen Stoffstrom gelöst in Form von Ammonium-Ionen vor, wobei sich das Dissoziationsgleichgewicht zwischen Ammonium-Ionen und Ammoniak durch den pH-Wert und der Temperatur einstellen lässt, sodass es vorteilhaft ist, die aus dem Ammonifikationsprozess verbliebene Restwärme zur Verschiebung des Dissoziationsgleichgewichts zu nutzen, um damit die Ausbeute des innerhalb des stickstoffhaltigen Stoffstroms gelösten Ammoniak zu erhöhen.

Daher sieht die Verwendung in einer vorteilhaften Ausgestaltung vor, dass der stickstoffhaltige Stoffstrom mittels einer Base, bevorzugt Natronlauge, in einen basischen pH-Wert-Bereich gebracht wird, bevorzugt in einem Bereich von 9 bis 10. Hierdurch kann der Anteil des in dem stickstoffhaltigen Stoffstrom vorhandenen Ammoniaks und letztlich die Ausbeute des durch die Reaktion mit der Schwefelsäure gebildeten Ammoniumsulfats erhöht werden.

Um jedoch bei der Bildung des Ammoniumsulfats eine hohe Reinheit der sich bildenden Kristalle bzw. Salzen gewährleisten zu können, sieht die Verwendung in einer vorteilhaften Ausgestaltung vor, dass der stickstoffhaltige Stoffstrom im Gegenstrombetrieb oder Gleichstrombetrieb an einer semipermeablen Membran mit der zur Bildung des Ammoniumsulfats reagierenden Schwefelsäure in Kontakt gebracht wird. Dabei kann das innerhalb des stickstoffhaltigen Stoffstroms vorhandene Ammoniak durch die semipermeable Membran insbesondere gasförmig hindurch diffundieren, um anschließend nach durchdringen der semipermeablen Membran mit der Schwefelsäure zu Ammoniumsulfat zu reagieren.

Da die Bildung von Ammoniumsulfat aus Ammoniak und Schwefelsäure eine stark exotherme Reaktion ist, wird das in Kontakt bringen der jeweiligen Stoffströme, also des stickstoffhaltigen Stoffstroms und der Schwefelsäure, im Gegenstromprinzip oder Gleichstromprinzip betrieben, da hierdurch ein optimaler Wärmeaustausch zwischen den beiden Stoffströmen stattfinden kann. Darüber hinaus kann das durch die pH-Wertänderung schlagartig ausfallende Ammoniumsulfat energiesparend zu Kristallen eingedampft werden, womit eine hohe Reinheit der derart gebildeten Ammoniumsulfatkristalle bzw. -salze gewährleistet werden kann.

Die semipermeable Membran kann dabei in einer vorteilhaften Ausgestaltung hydrophobe Eigenschaften und/oder eine Porengröße von 0,1 bis 0,3 µm aufweisen. Als hydrophobes Material für die semipermeable Membran eignet sich dabei insbesondere Polytetraflourethylen, Polypropylen oder Polyvinylidenflourid.

Gemäß einem weiteren Aspekt betrifft die vorliegende Erfindung einen phosphorhaltigen Stoffstrom, der durch das oben beschriebene Verfahren erhältlich ist.

Die Erfindung sieht vor, dass der phosphorhaltige Stoffstrom und der stickstoffhaltige Stoffstrom zur Bildung von Ammoniumphosphat in Kontakt gebracht werden. Der gelöste bzw. aufgeschlossene Phosphor kann dabei im phosphorhaltigen Stoffstrom beispielsweise in Form von Phosphorsäure vorliegen, wobei die Phosphorsäure mit dem im stickstoffhaltigen Stoffstrom vorhandenen Ammoniak bei in Kontakt bringen des phosphorhaltigen Stoffstroms mit dem stickstoffhaltigen Stoffstrom innerhalb des phosphorhaltigen Stoffstroms zu Ammoniumphosphat reagieren kann. Das so gebildete Ammoniumphosphat liegt dabei allerdings aufgrund seiner hohen Löslichkeit meist im phosphorhaltigen Stoffstrom gelöst vor.

Um sicherzustellen, dass der gelöste bzw. aufgeschlossene Phosphor im phosphorhaltigen Stoffstrom in Form von Phosphorsäure vorliegt, sieht die Verwendung in vorteilhafter Ausgestaltung vor, dass der phosphorhaltige Stoffstrom mittels einer Säure, bevorzugt Schwefelsäure, in eine pH-Wert-Bereich von 0,5-1,5 eingestellt wird. Durch die Zugabe einer geeignet starken Säure, insbesondere von Schwefelsäure, kann sichergestellt werden, dass der gelöste bzw. aufgeschlossene Phosphor im phosphorhaltigen Stoffstrom in Form von Phosphorsäure vorliegt.

Da das Ammoniak im stickstoffhaltigen Stoffstrom gelöst in Form von Ammonium-lonen vorliegt, wobei sich das Dissoziationsgleichgewicht zwischen Ammonium-lonen und Ammoniak durch den pH-Wert und der Temperatur einstellen lässt, sieht das Verfahren in einer vorteilhaften Verwendung vor, dass der stickstoffhaltige Stoffstrom mittels einer Base, bevorzugt Natronlauge, in einen basischen pH-Wert-Bereich gebracht wird, bevorzugt in einem Bereich von 9 bis 10. Hierdurch kann der Anteil des in dem stickstoffhaltigen Stoffstrom vorhandenen Ammoniaks und letztlich die Ausbeute des durch die Reaktion mit der im phosphorhaltigen Stoffstroms vorhandenen Phosphorsäure gebildeten Ammoniumphosphats erhöht werden.

Ferner ist die Bildung von Ammoniumphosphat aus Ammoniak und Phosphorsäure eine stark exotherme Reaktion, sodass das in Kontakt bringen der jeweiligen Stoffströme, also des stickstoffhaltigen Stoffstroms und des phosphorhaltigen Stoffstroms, im Gegenstromprinzip betrieben, da hierdurch ein optimaler Wärmeaustausch zwischen den beiden Stoffströmen stattfinden kann. Dabei kann das innerhalb des stickstoffhaltigen Stoffstroms vorhandene Ammoniak durch die semipermeable Membran insbesondere gasförmig hindurch diffundieren, um anschließend nach durchdringen der semipermeablen Membran mit der Phosphorsäure des phosphorhaltigen Stoffstroms zu Ammoniumphosphat zu reagieren.

Auch hier kann die semipermeable Membran dabei in einer vorteilhaften Ausgestaltung hydrophobe Eigenschaften und/oder eine Porengröße von 0,1 bis 0,3 µm aufweisen. Als hydrophobes Material für die semipermeable Membran eignet sich dabei insbesondere Polytetraflourethylen, Polypropylen oder Polyvinylidenflourid.

In einer besonders bevorzugten Verwendung des nach dem Verfahren hergestellten stickstoffhaltigen Stoffstroms zur Bildung von Ammoniumphosphat und Ammoniumsulfat kann der stickstoffhaltige Stoffstrom in Serie oder parallel mit dem nach dem Verfahren hergestellten phosphorhaltigen Stoffstrom und mit Schwefelsäure in Kontakt gebracht werden. Hierdurch kann sichergestellt werden, dass sämtliches bei der Ammonifikation hergestellte Ammoniak, welches gelöst in Form von Ammonium-Ionen vorliegen kann, zur Bildung von Ammoniumsalzen genutzt werden kann.

Insbesondere kann gewährleistet werden, dass sämtlicher aufgeschlossene bzw. gelöste Phosphor im phosphorhaltigen Stoffstrom mit dem im stickstoffhaltigen Stoffstrom enthaltenen Ammoniak zu Ammoniumphosphat reagiert und noch überschüssiges Ammoniak bzw. Ammonium-Ionen in Form von Ammoniumsulfat gewonnen werden kann. Somit kann das im stickstoffhaltigen Stoffstrom enthaltene Ammoniak bzw. die Ammonium-Ionen vollständig verwertet werden.

Ein weiterer Vorteil liegt darin, dass je nach Bedarf oder gesetzlichen Regelung in den jeweils verschiedenen Staaten der stickstoffhaltige Stoffstrom zur Bildung von Ammoniumphosphat oder zur Bildung von Ammoniumsulfat oder jeweils anteilig zur Bildung von beiden Verbindungen zur Verfügung gestellt werden kann.

Weiterhin sieht das Verfahren in einer vorteilhaften Verwendung vor, dass das gebildete Ammoniumphosphat, welches bevorzugt gelöst in Form von Ammonium-Ionen und Phosphat-Ionen vorliegt, durch Zugabe von Magnesiumchlorid als Struvit, besser bekannt als Magnesiumammoniumphosphat (MAP), ausgefällt werden kann. Dabei liegt der optimale Auskristallisationspunkt zur Bildung von MAP in einem basischen pH-Wert, bevorzugt in einem Bereich von 7 bis 10, wobei dieser durch Zugabe einer Base, bevorzugt von Natronlauge, und/oder durch Verwendung des stickstoffhaltigen Stoffstroms entsprechend eingestellt werden kann.

Gemäß einem weiteren Aspekt betrifft die vorliegende Erfindung einen Feststoff, der durch das oben beschriebene Verfahren erhältlich ist.

Die Erfindung sieht vor, dass die aus dem feststoffhaltigen Stoffstrom gewonnenen Feststoffe, insbesondere die HTC-Kohle, als Trägermaterial für Katalysatoren oder so Sorbens für die Reinigung, insbesondere von Abwässern, genutzt werden kann. Der Vorteil, der sich aus der Verwendung des aus dem feststoffhaltigen Stoffstrom gewonnen Feststoff ergibt, ist, dass insbesondere die darin enthaltenen HTC-Kohle eine hohe Schadstoffaffinität, beispielsweise für Polyaromatische-Kohlenwasserstoffe (PAK), Nanopartikel oder Dioxine, aufweist, welche bei Verwendung des Feststoffs zur Reinigung von Abwässern aus dem jeweiligen Abwasser gefiltert werden können.

Der mit Schadstoffen beladene Feststoff kann letztlich noch weiter verwendet werden, insbesondere als Brennmaterial zur Energiegewinnung, wobei gerade durch die vorherige Nutzung als Sorbens der Feststoff durch den Einschluss von PAK, Nanopartikel oder Dioxinen einen erhöhten Brennwert aufweist.

Sämtliche Merkmale der Erfindung können sowohl einzeln als auch in beliebiger Kombination miteinander erfindungswesentlich sein.

Im Weiteren wird das erfindungsgemäße Verfahren sowie die Verwendung der selektierten und aufbereiteten Stoffströme anhand eines Ausführungsbeispiels näher erläutert.

Es zeigt:

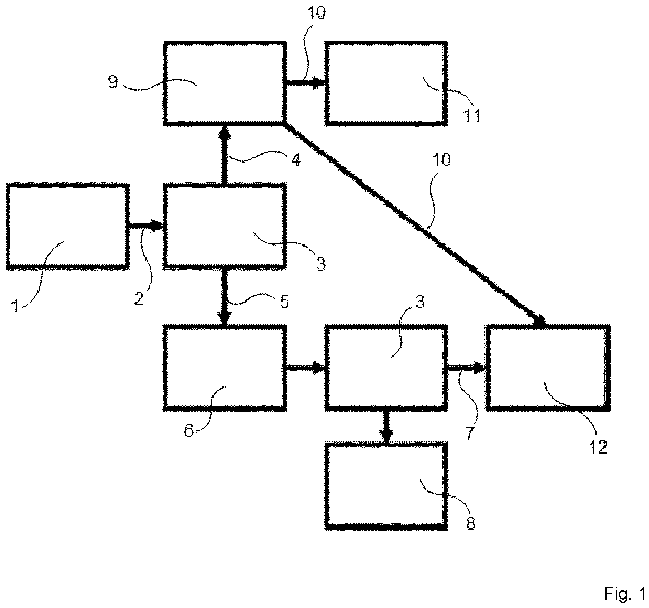

Fig. 1: ein Fließbildschema für die Selektierung, Aufbereitung und Verwendung von einzelnen Stoffströmen.

Figur 1 zeigt ein Fließbildschema für die Selektierung, Aufbereitung und Verwendung von einzelnen Stoffströmen. Zunächst wird Biomasse, insbesondere Klärschlamm von einer Kläranlage, mittels eines hydrothermalen Karbonisierungsprozesses 1 behandelt, wobei der durch das hydrothermale Karbonisierungsprozess erhaltene Stoffstrom 2 zunächst einer Fest-Flüssig-Trennung 3 unterzogen und somit in einen feststoffhaltigen Stoffstrom 5 und einem prozesswasserhaltigen Stoffstrom 4 separiert wird, ohne dass der pH-Wert des aus dem hydrothermalen Karbonisierungsprozess entstammenden Stoffstroms 2 oder die der nach der Fest-Flüssig-Trennung 3 gebildeten prozesswasserhaltigen 4 und feststoffhaltigen Stoffstroms 5 angepasst wird.

Der durch die Fest-Flüssig-Trennung 3 vom Prozesswasser getrennte feststoffhaltige Stoffstrom 5 wird anschließend mittels Auslaugung 6, also dem Lösen bzw. Extrahieren von Stoffen mittels geeigneter Lösungen bzw. Lösungsmitteln, behandelt, sodass die innerhalb des feststoffhaltigen Stoffstroms 5 vorhandenen Phosphorverbindungen herausgelöst bzw. extrahiert werden können.

Anschließend wird der mittels Auslaugung 6 behandelte feststoffhaltige Stoffstrom 5 einer Fest-Flüssig-Trennung 3 unterzogen, womit Feststoffe 8, insbesondere HTC-Kohle, und ein phosphorhaltige Stoffstrom 7 erhalten wird. Auch hier findet keine Justierung des pH-Wertes des erhaltenen phosphorhaltigen Stoffstroms 7 statt. Der so erhaltene Feststoff 8, wobei dieser meist ausschließlich aus HTC Kolle besteht, kann anschließend beispielsweise weiteren Reinigungsschritten, insbesondere einer weiteren Infiltration sowie Auslaugung unterzogen werden, sodass dieser gegebenenfalls gereinigte Feststoff 8 sich anschließend als Trägermaterial oder Sorbens für die Reinigung von Abwässern, insbesondere von Kläranlagen, eignet.

Weiterhin kann der durch die Fest-Flüssig-Trennung 3 erhaltene phosphorhaltige Stoffstrom 7 zur Erhöhung der Reinheit beispielsweise durch Filtration, insbesondere Mikro-, Ultra- oder Nanofiltration, oder mittels Flüssig-Flüssig-Extraktion gereinigt werden.

Der gegebenenfalls gereinigte phosphorhaltige Stoffstrom 7 kann anschließend mit dem stickstoffhaltigen Stoffstrom zur MAP-Fällung 12 in Kontakt gebracht werden, wobei zur Ausfällung des MAP durchaus die Anpassung des pH-Wertes von Vorteil sein kann, insbesondere um die Geschwindigkeit der Fällungsreaktion positiv zu beeinflussen.

Ferner kann der aus der Fest-Flüssig-Trennung 3 erhaltene, prozesswasserhaltigen Stoffstrom 4 in einen anaeroben Reaktor 9 zum Ausschluss der innerhalb des prozesswasserhaltigen Stoffstroms 4 vorhandenen Stickstoffverbindungen eingeführt werden. Auch kann ein Teil des prozesswasserhaltigen Stoffstroms 4 zur Rückgewinnung von etwaigen noch nicht vollständig umgesetzten Verbindungen sowie noch vorhandener Restwärme in den hydrothermalen Karbonisierungsprozess 1 zurückgeführt werden.

Der durch den Aufschluss der stickstoffhaltigen Verbindungen im anaeroben Reaktor 9 gebildete, stickstoffhaltige Stoffstrom 10, dessen pH-Wert nach dem Aufschluss ebenfalls nicht justiert wird, kann anschließend beispielsweise mittels einer Ultra- und Nanofiltration gereinigt und danach sowohl zur Ammoniumsulfat-Fällung 11 mit Schwefelsäure als auch zur MAP-Fällung mit dem phosphorhaltigen Stoffstrom 7 und Magnesiumchlorid genutzt werden.

Somit ist vorstehend eine energie- und ressourcenschonende Selektierung und Aufbereitung von Stoffströmen aus einem hydrothermalen Karbonisierungsprozess sowie deren Verwendung zur Herstellung von Ammoniumsulfat und Magnesiumammoniumphosphat (MAP) sowie Trägermaterialien oder Sorbens zur Abwasserreinigung offenbart.

### BEZUGSZEICHENLISTE

- 1: Hydrothermaler Karbonisierungsprozess (HTC)
- 2: HTC-Stoffstrom
- 3: Fest-Flüssig-Trennung
- 4: Prozesswasserhaltiger Stoffstrom
- 5: Feststoffhaltiger Stoffstrom
- 6: Auslaugung
- 7: Phosphorhaltiger Stoffstrom
- 8: Feststoff
- 9: Anaerober Reaktor
- 10: Stickstoffhaltiger Stoffstrom
- 11: Ammoniumsulfat-Fällung
- 12: MAP-Fällung

## Patentansprüche

1. Verfahren zur selektiven Trennung und Aufbereitung von wenigstens einem Stoffstrom (2,4,5) aus einem hydrothermalen Karbonisierungsprozess (1), wobei der aus dem hydrothermalen Karbonisierungsprozess (1) entstammende Stoffstrom (2) mittels einer Fest-Flüssig-Trennung (3) in einen feststoffhaltigen Stoffstrom (5) und in einen prozesswasserhaltigen Stoffstrom (4) separiert und in einem Endschritt aus dem wenigstens einen Stoffstrom (4,5) ein Produkt gebildet wird, **dadurch gekennzeichnet, dass** die Justierung des pH-Werts des wenigstens einen Stoffstroms (2,4,5,7,10) durch Zugabe einer Säure und/oder Base frühstens beim Endschritt stattfindet.

2. Verfahren nach Anspruch 1, **dadurch gekennzeichnet, dass** ein Teil des prozesswasserhaltigen Stoffstroms (4) in den hydrothermalen Karbonisierungsprozess (1) zurückgeführt wird.

3. Verfahren nach Anspruch 1 oder 2, **dadurch gekennzeichnet, dass** mittels Auslaugung (6) Phosphorverbindungen aus dem feststoffhaltigen Stoffstrom (5) in einen phosphorhaltigen Stoffstrom (7) überführt werden, wobei die Auslaugung (6) bevorzugt mit Lösungen und/oder Lösungsmitteln mit einem sauren pH-Wert, bevorzugt mit einem pH-Wert in einem Bereich von 1 bis 2, durchgeführt wird und besonders bevorzugt der phosphorhaltige Stoffstrom (7) mittels einer Filtration und/oder einem Flüssig-Flüssig-Trennverfahren gereinigt und/oder aufkonzentriert wird.

4. Verfahren nach wenigstens einem der vorhergehenden Ansprüche 1 bis 3, **dadurch gekennzeichnet, dass** die in dem feststoffhaltigen Stoffstrom (5) vorhandenen Feststoffe (8), insbesondere HTC-Kohle, mittels einer Fest-Flüssig-Trennung, insbesondere einer Filtration, aus dem feststoffhaltigen Stoffstrom (5) abgetrennt werden.

5. Verfahren nach wenigstens einem der Ansprüche 1 bis 4, **dadurch gekennzeichnet, dass** der prozesswasserhaltige Stoffstrom (4) in ein anaerobes Reaktionsgefäß, insbesondere in einen anaeroben Reaktor (9), zum Aufschluss der stickstoffhaltigen Verbindungen aus dem prozesswasserhaltigen Stoffstrom (4) und zur Bildung eines stickstoffhaltigen Stoffstroms (10), eingeführt wird.

6. Verfahren nach Anspruch 5, **dadurch gekennzeichnet, dass** der stickstoffhaltige Stoffstrom (10) mittels Ultrafiltration gereinigt wird.

7. Verfahren nach Anspruch 6, **dadurch gekennzeichnet, dass** der stickstoffhaltige Stoffstrom (10) mittels Nanofiltration gereinigt wird, insbesondere zur Abtrennung von inerten und/oder refraktären Verbindungen.

8. Stickstoffhaltiger Stoffstrom, erhältlich aus einem Verfahren gemäß den Ansprüchen 5 bis 7.

9. Verwendung des stickstoffhaltigen Stoffstroms nach Anspruch 8 zur Bildung von Ammoniumsulfat durch in Kontakt bringen mit Schwefelsäure.

10. Verwendung nach Anspruch 9, **dadurch gekennzeichnet, dass** mittels einer Base, bevorzugt Natronlauge, der pH-Wert des stickstoffhaltigen Stoffstroms (10) in einen basischen Bereich, bevorzugt in einen Bereich von 9 bis 10, eingestellt wird.

11. Verwendung nach Anspruch 9 oder 10, **dadurch gekennzeichnet, dass** der stickstoffhaltige Stoffstrom (10) im Gleichstrombetrieb an einer semipermeablen Membran mit der Schwefelsäure in Kontakt gebracht wird, wobei bevorzugt die semipermeable Membran hydrophobe Eigenschaften und/oder eine Porengröße von 0,1 bis 0,3 µm aufweist.

12. Verwendung nach Anspruch 9 oder 10, **dadurch gekennzeichnet, dass** der stickstoffhaltige Stoffstrom (10) im Gegenstrombetrieb an einer semipermeablen Membran mit der Schwefelsäure in Kontakt gebracht wird, wobei bevorzugt die semipermeable Membran hydrophobe Eigenschaften und/oder eine Porengröße von 0,1 bis 0,3 µm aufweist.

13. Phosphorhaltiger Stoffstrom, erhältlich nach einem Verfahren gemäß Anspruch 3.

14. Verwendung des stickstoffhaltigen Stoffstroms (10) nach Anspruch 8 und des phosphorhaltigen Stoffstroms (7) nach Anspruch 13 zur Bildung von Ammoniumphosphat durch in Kontakt bringen des stickstoffhaltigen Stoffstroms (10) mit dem phosphorhaltigen Stoffstrom (7).

15. Verwendung nach Anspruch 14, **dadurch gekennzeichnet, dass** der pH-Wert des phosphorhaltigen Stoffstroms (7) mittels einer Säure, bevorzugt Schwefelsäure, in einen Bereich von 0,5 bis 1,5 eingestellt wird.

16. Verwendung nach Anspruch 14 oder 15, **dadurch gekennzeichnet, dass** der pH-Wert des stickstoffhaltigen Stoffstroms (10) mittels einer Base, bevorzugt Natronlauge, in einen Bereich von 9 bis 11 eingestellt wird.

17. Verwendung nach wenigstens einem der Ansprüche 14 bis 16, **dadurch gekennzeichnet, dass** der phosphorhaltige (7) und der stickstoffhaltige Stoffstrom (10) im Gleichstrombetrieb an einer semipermeablen Membran in Kontakt gebracht werden, wobei bevorzugt die semipermeable Membran hydrophobe Eigenschaften und/oder eine Porengröße von 0,1 bis 0,3 µm aufweist.

18. Verwendung nach wenigstens einem der Ansprüche 14 bis 16, **dadurch gekennzeichnet, dass** der phosphorhaltige (7) und der stickstoffhaltige Stoffstrom (10) im Gegenstrombetrieb an einer semipermeablen Membran in Kontakt gebracht werden, wobei bevorzugt die semipermeable Membran hydrophobe Eigenschaften und/oder eine Porengröße von 0,1 bis 0,3 µm aufweist.

19. Verwendung nach wenigstens einem der Ansprüche 14 bis 18, **dadurch gekennzeichnet, dass** durch Zugabe eines Magnesiumsalzes das Ammoniumphosphat in Form von Magnesiumammoniumphosphat ausgefällt wird.

20. Verwendung nach Anspruch 19, **dadurch gekennzeichnet, dass** der pH-Wert zur Ausfällung von Magnesiumammoniumphosphat mittels einer Base, bevorzugt Natronlauge, und/oder mittels des stickstoffhaltigen Stoffstroms (10) in einen basischen Bereich, insbesondere in einen Bereich von 7 bis 10, gebracht wird.

21. Feststoff, erhältlich nach einem Verfahren gemäß Anspruch 4.

22. Verwendung des Feststoffs nach Anspruch 21 als Trägermaterial für Katalysatoren oder Sorbens für die Reinigung, insbesondere von Abwässern.
